# EUROPEAN PATENT APPLICATION

(11) **EP 4 769 899 A1**
(43) Date of publication of application: **01.07.2026**
(21) Application number: 25211308.9
(22) Date of filing: 27.10.2025
(51) Int. Cl.: H02J 13/12, G01D 9/00

(54) **METHOD AND APPARATUS FOR RECORDING DATA OF SOLAR POWER GENERATION SYSTEM**

(30) Priority: 26.12.2024 KR 20240196480
(71) Applicant: Hanwha Solutions Corporation, Jung-gu Seoul 04541 (KR)
(72) Inventor: YU, Min Ho, 04541 Seoul (KR); HYUN, Dong Yub, 04541 Seoul (KR); KIM, Young Cheol, 04541 Seoul (KR); HONG, Min Ki, 04541 Seoul (KR)
(74) Representative: Mooser, Sebastian Thomas

(57) **Abstract**

Provided are a method and apparatus for recording data of a solar power generation system. The method includes storing, in a first manner, first data about a state of at least one apparatus included in the solar power generation system before an event occurs in the at least one apparatus, in a buffer included in a power conversion system (PCS), storing, in a second manner, second data about a state of the at least one apparatus after the event has occurred, in the buffer, based on detecting the event, storing the first data and the second data in a persistent storage device included in the PCS and distinguished from the buffer, and transmitting data stored in the persistent storage device to an external device of the PCS.

## Description

### BACKGROUND

### 1. Field

The disclosure relates to a method and apparatus for recording data of a solar power generation system.

### 2. Description of the Related Art

A transient recorder may indicate an apparatus for recording data about a state of a specific system. For example, in case that the specific system malfunctions, the transient recorder may record data about the state of the specific system before and after a malfunction.

The data obtained by the transient recorder may be used for stable operations of the specific system. For example, to stably operate the specific system, it is required to record and analyze the data about the state of the system before and after the malfunction, obtained by the transient recorder. In this regard, a technology is required to preserve the data obtained by the transient recorder.

The aforementioned background technology is technical information possessed by the inventor for derivation of the disclosure or acquired by the inventor during the derivation of the disclosure, and is not necessarily prior art disclosed to the public before the application of the disclosure.

### SUMMARY

Provided are a method and apparatus for recording data of a solar power generation system. The disclosure may provide an energy storage system capable of recording and preserving data of a solar power generation system.

Aspects of the disclosure are not limited to those mentioned above, and other aspects and advantages of the disclosure, which are not mentioned, will be understood from descriptions below and will become more apparent by embodiments of the disclosure. In addition, the aspects and advantages of the disclosure will be realized through means and combinations thereof in the claims.

According to an aspect of the disclosure, a method of recording data of a solar power generation system, includes storing, in a first manner, first data about a state of at least one apparatus included in the solar power generation system before an event occurs in the at least one apparatus, in a buffer included in a power conversion system (PCS), storing, in a second manner, second data about a state of the at least one apparatus after the event has occurred, in the buffer, based on detecting the event, storing the first data and the second data in a persistent storage device included in the PCS and distinguished from the buffer, and transmitting data stored in the persistent storage device to an external device of the PCS.

According to another aspect of the disclosure, an energy storage system includes a first processor and a second processor, which are configured to execute at least one program to perform an operation, wherein the first processor is further configured to store, in a first manner, first data about a state of at least one apparatus included in a solar power generation system before an event occurs in the at least one apparatus, in a buffer included in a power conversion system (PCS), store, in a second manner, second data about a state of the at least one apparatus after the event has occurred, in the buffer, based on detecting the event, store the first data and the second data in a persistent storage device included in the PCS and distinguished from the buffer, and transmit data stored in the persistent storage device to an external device of the PCS.

According to another aspect of the disclosure, a computer-readable recording medium has recorded thereon a program for causing a computer to execute the above method.

Aspects, features, and advantages other than those described above may become clear from the following drawings, the claims, and the detailed description of the disclosure.

### BRIEF DESCRIPTION OF THE DRAWINGS

FIG. 1 is a diagram for schematically describing a power supply system;
FIG. 2 is a diagram schematically showing an energy storage system according to an embodiment;
FIG. 3 is a block diagram of an energy storage system according to an embodiment;
FIG. 4 is a flowchart of a method by which an energy storage system records data about a state of at least one apparatus included in a solar power generation system, according to an embodiment;
FIG. 5 is a diagram for describing a method by which an energy storage system stores first data and second data in a buffer included in a power conversion system (PCS), according to an embodiment;
FIG. 6 is a flowchart of a method by which an energy storage system stores first data and second data in a buffer included in a PCS, according to an embodiment;
FIG. 7 is a flowchart of a method by which an energy storage system stores first data and second data in a persistent storage device included in a PCS, according to an embodiment; and
FIG. 8 is a diagram for describing a method by which an energy storage system transmits data stored in a persistent storage device to an external device of a PCS, according to an embodiment.

### DETAILED DESCRIPTION

Advantages and features of the disclosure and methods of accomplishing the same may be understood more readily by reference to the following detailed description of the embodiments and the accompanying drawings. However, it should be understood that the disclosure is not limited to the embodiments presented below, but may be implemented in various different forms, and include all transformations, equivalents, and substitutes included in the spirit and scope of the disclosure. The embodiments presented below are provided to complete the disclosure and to fully inform one of ordinary skill in the art of the scope of the disclosure. In the description of the disclosure, certain detailed explanations of related art are omitted when it is deemed that they may unnecessarily obscure the essence of the disclosure.

Also, the terms used in the present specification are only used to describe specific embodiments, and are not intended to limit the disclosure. The singular forms are intended to include the plural forms as well, unless the context clearly indicates otherwise. In the present specification, it is to be understood that terms such as "including" or "having", etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Some embodiments of the disclosure may be represented by functional block configurations and various processing operations. Some or all of these functional blocks may be implemented by various numbers of hardware and/or software configurations that perform particular functions. For example, the functional blocks of the disclosure may be implemented by one or more microprocessors or by circuit configurations for a certain function. Also, for example, the functional blocks of the disclosure may be implemented in various programming or scripting languages. The functional blocks may be implemented by algorithms executed in one or more processors. In addition, the disclosure may employ general techniques for electronic environment setting, signal processing, and/or data processing. Terms such as "mechanism", "element", "means", and "configuration" may be used broadly and are not limited as mechanical and physical configurations.

In addition, a connection line or a connection member between components shown in drawings is merely a functional connection and/or a physical or circuit connection. In an actual device, connections between components may be represented by various functional connections, physical connections, or circuit connections that are replaceable or added.

Hereinafter, the disclosure will be described in detail with reference to accompanying drawings.

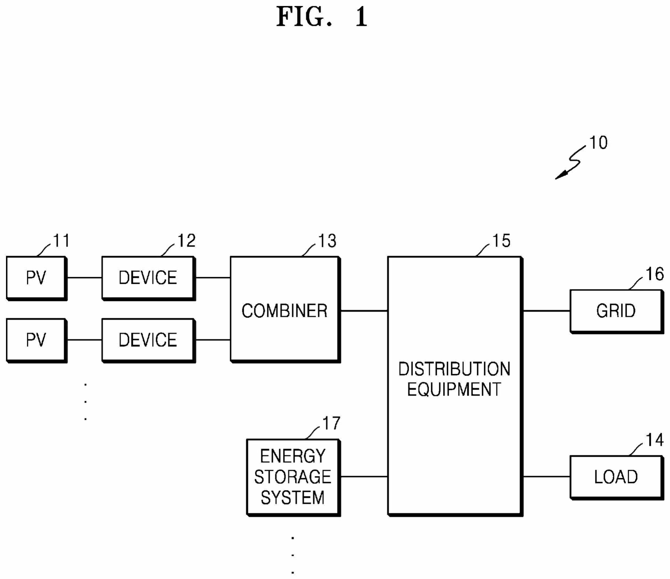

FIG. 1 is a diagram for schematically describing a power supply system 10.

Referring to FIG. 1, the power supply system 10 may include a photovoltaic module 11, a device 12, a load 14, and/or a distribution equipment 15. The power supply system 10 may be connected to an external grid 16.

At least one photovoltaic module 11 may be installed on a roof or exterior wall of a building and generate power. A plurality of photovoltaic modules 11 may be connected to each other to form a photovoltaics module array.

The photovoltaic module 11 may be connected to the device 12. For example, at least one device 12 may be connected to each photovoltaic module 11. For example, when one device 12 is connected to each photovoltaic module 11, the number of devices 12 configuring the power supply system 10 may be the same as the number of photovoltaic modules 11.

The device 12 may include a power conditioning system or power conversion system (PCS), which performs power conversion for power generated in the photovoltaic module 11. For example, the device 12 may perform certain conversion on the power generated in the photovoltaic module 11 and supply the power to other components (e.g., the grid 16 and/or the load 14) of the power supply system 10.

The device 12 may include module level power electronics (MLPE). For example, the device 12 may include an optimizer or a micro inverter (MI).

For example, when the device 12 includes an optimizer, the device 12 may adjust power generated in the photovoltaic module 11 and output the adjusted power to an inverter (e.g., a string inverter). A current converted by the inverter (e.g., convert a direct current into an alternating current) may be output to the grid 16 or the load 14.

In another example, when the device 12 is an MI, the device 12 may convert power generated in the photovoltaic module 11 (e.g., convert a direct current into an alternating current). The current converted by the device 12 may be output to the grid 16 or the load 14.

When necessary, the power supply system 10 may further include a combiner 13. At least some of the devices 12 may be connected to the distribution equipment 15 through the combiner 13. For example, power output from the plurality of devices 12 may be combined into one output in the combiner 13 and supplied to the distribution equipment 15.

The device 12 and the distribution equipment 15 may be connected to each other through a power path that does not include the combiner 13, or at least one device 12 may be connected to the distribution equipment 15 through a power path that does not include the combiner 13 while at least one other device 12 may be connected to the distribution equipment 15 through the combiner 13.

The combiner 13 may control a voltage, a current, and/or power output from the device 12 according to a power supply status of the photovoltaic module 11, the device 12 and/or the grid 16, and an operating mode of the combiner 13 may be set to a diagnosing mode, a driving mode, or the like.

The combiner 13 may include an energy management system (EMS) configured to control operations of the combiner 13. The EMS may control a voltage, a current, and/or power supplied to the combiner 13 or output from the combiner 13 according to the power supply status of the photovoltaic module 11, the device 12 and/or the grid 16, and the operating mode of the combiner 13 may be set to the diagnosing mode, the driving mode, or the like.

The load 14 refers to an entity that is installed at an electric power consumer, such as a house, a commercial facility, or a factory, and operates by receiving at least one of energy generated by the photovoltaic module 11, energy stored in an energy storage system 17, and/or energy supplied from the grid 16. For example, when the electric power consumer receiving power is a house, the load 14 may include a home appliance, such as a washing machine, a refrigerator, or a television (TV).

The grid 16 may include an infrastructure system for generating, transmitting, and distributing power. For example, the grid 16 may include an infrastructure system such as a power plant, a substation, and a power line. The grid 16 may transfer electrical energy generated in a power plant to the power supply system 10 or transfer surplus power generated in the power supply system 10 to the outside of the power supply system 10.

For example, commercial power transmitted from the grid 16 through a telegraph pole may be supplied to a power consumer through a transformer. The power supply system 10 may be implemented as an off-grid system that is not connected to the grid 16.

The power supply system 10 may further include at least one energy storage system 17. When necessary, the power supply system 10 may include a plurality of energy storage systems 17. The energy storage system 17 may receive and store power generated by the photovoltaic module 11 and/or power transmitted from the grid 16. The energy storage system 17 may efficiently supply power by storing power and supplying power to the load 14 when the load 14 needs power.

The energy storage system 17 may include a battery storing power, and a power conversion module. The battery may include a battery management system (BMS) configured to monitor a state of charge (SOC), a state of health (SOH), a voltage and/or a current of the battery, perform diagnosis on the battery, and perform a safety function such as current cutoff.

The power conversion module may be a PCS configured to perform conversion between power at the battery and power at an opposite side. For example, the PCS may convert between a direct current at the battery and an alternating current at an opposite side. For example, the PCS may include a bidirectional direct current (DC)-DC converter that is connected to the battery and converts a voltage, and a bidirectional inverter that connects a DC-DC converter to the outside of the energy storage system 17.

The energy storage system 17 may further include an EMS configured to control operations of the energy storage system 17. The EMS may control a voltage, a current and/or power supplied to or output from the energy storage system 17 according to a power supply status of the battery and/or grid 16, and may set an operating mode of the energy storage system 17 to a diagnosing mode, a driving mode, or the like.

When necessary, the EMS coupled to a certain component of the power supply system 10 may not only control operations of the certain component, but may also further control operations of other components of the power supply system 10. For example, the EMS coupled to the combiner 13 or the EMS coupled to the energy storage system 17 may control both operations of the combiner 13 and operations of the energy storage system 17.

The distribution equipment 15 may provide an electrical connection between components of the power supply system 10 and may control a power flow of the power supply system 10. For example, the distribution equipment 15 may electrically connect the photovoltaic module 11 and the load 14 to each other. For example, the distribution equipment 15 may be connected to the device 12 that is connected to the photovoltaic module 11 to electrically connect the photovoltaic module 11 and the load 14 to each other. When necessary, the distribution equipment 15 may be further connected to at least one of the energy storage system 17 or the grid 16.

For example, the distribution equipment 15 may be a distribution panel configured to distribute power within the power supply system 10. For example, the distribution equipment 15 may be a master service panel (MSP) configured to distribute power generated in the photovoltaic module 11 to the load 14 and the like.

In another example, the distribution equipment 15 may be a main controller configured to perform power distribution within the power supply system 10 and control each device 12. For example, the main controller may include a switch, a circuit breaker, and a control unit. The switch, the circuit breaker, and the control unit may each be implemented as independent apparatuses, or at least some of the switch, the circuit breaker and the control unit may be included in a single apparatus.

The main controller may include the switch that controls electrical connections between components connected to the main controller, such as the device 12 and the load 14. For example, the main controller may include a relay or a power semiconductor, which provides or blocks an electrical connection to the device 12 and/or the energy storage system 17, depending on an operating state of each component of the power supply system 10.

The main controller may perform rapid shutdown to stop power generation of the photovoltaic module 11 in an emergency situation such as occurrence of an overcurrent in the power supply system 10. In this regard, the main controller may include the circuit breaker that blocks a connection between the device 12 and the load 14.

The main controller may include the control unit configured to generally control operations of the main controller. The control unit may control operations of other components (e.g., the device 12 or the energy storage system 17) of the power supply system 10, in addition to the main controller.

The control unit may control a voltage, a current and/or power output from or supplied to each component, according to a power supply status of the photovoltaic module 11, the device 12, the combiner 13, the load 14, the grid 16 and/or the energy storage system 17. The control unit may set an operating mode of the main controller, the device 12 and/or the energy storage system 17 to a diagnosing mode, a driving mode, or the like.

For example, the control unit may control the photovoltaic module 11, the device 12, the combiner 13 and/or the energy storage system 17, based on a state of the power supply system 10. For example, the control unit may control other components of the power supply system 10 by causing the main controller to communicate with other components (e.g., the device 12) of the power supply system 10. Communication between the main controller and other components of the power supply system 10 may be performed using power line communication (PLC), but is not limited thereto.

For example, the control unit may control the device 12 according to a power generation state of the photovoltaic module 11. For example, the main controller may receive a control command from a server that monitors the power generation state of the photovoltaic module 11, and the control unit may control the device 12 according to the control command.

The main controller may supply power to at least a portion of the load 14 when power supply from the grid 16 is not smooth (e.g., in an off-grid situation). For example, when the power supply from the grid 16 is not smooth, the main controller may preferentially supply power generated in the photovoltaic module 11 and/or power stored in the energy storage system 17 to a backup load that has a relatively high need for stable power supply.

The power supply system 10 may further include an auxiliary power generation device (e.g., a diesel generator) configured to generate power in a separate manner other than solar power generation. For example, the auxiliary power generation device may be further connected to the distribution equipment 15. When the backup load is unable to be handled by only the photovoltaic module 11 and the energy storage system 17 due to environmental factors such as time zone or weather, the main controller may supply power generated by the auxiliary power generation device to the backup load.

The control unit may be implemented by at least one processor. The processor may process a command of a computer program by performing basic arithmetic, logic, and input/output operations. A command may be provided from an internal memory of the main controller or from an external device. The processor may generally control operations of other components included in the main controller.

The processor may perform at least some of data analysis, processing, and result information generation for performing the above-described operations by using at least one of machine learning, a neural network, or a deep learning algorithm as a rule-based or artificial intelligence algorithm. Examples of the neural network include architecture-based neural network models, such as a convolutional neural network (CNN), a deep neural network (DNN), and a recurrent neural network (RNN).

For example, the processor may be implemented as an array of a plurality of logic gates, or in a combination of a general-purpose microprocessor and a memory storing a program executable by the general-purpose microprocessor. For example, the processor may include a general-purpose processor, a central processing unit (CPU), a microprocessor, a digital signal processor (DSP), a controller, a microcontroller, a state machine, or the like.

In some environments, the processor may include an application-specific semiconductor (ASIC), a programmable logic device (PLD), a field programmable gate array (FPGA), or the like. For example, the processor may refer to a combination of processing devices, such as a combination of a DSP and a microprocessor, a combination of a plurality of microprocessors, a combination of one or more microprocessors coupled with a DSP core, or a combination of any other such components.

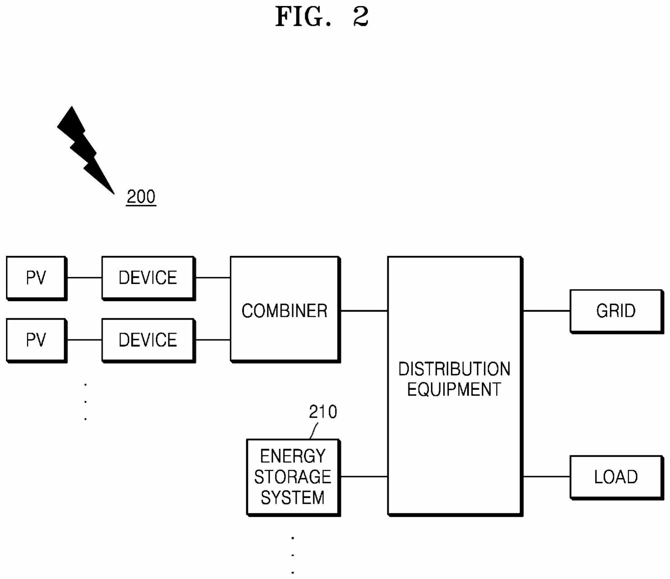

FIG. 2 is a diagram schematically showing an energy storage system 210 according to an embodiment.

Hereinafter, an apparatus capable of implementing a method described below with reference to FIGS. 2 to 8 will be referred to as the energy storage system 210. The energy storage system 210 may correspond to the energy storage system 17 illustrated in FIG. 1.

Referring to FIG. 2, a solar power generation system 200 including the energy storage system 210 according to an embodiment is illustrated. The solar power generation system 200 may correspond to the power supply system 10 illustrated in FIG. 1. Detailed descriptions about components that may be included in the solar power generation system 200 according to an embodiment have been described above with reference to FIG. 1, and thus are omitted.

The solar power generation system 200 may indicate a system for supplying power by converting solar energy into electrical energy. To stably supply power by using the solar power generation system 200, it is required to record data about a state of the solar power generation system 200. The data about the state of the solar power generation system 200 may indicate data about states of various apparatuses included in the solar power generation system 200.

A transient recorder may be used to continuously record the state of the solar power generation system 200. The transient recorder may indicate an apparatus that records data about a state of a system before and after an event occurs. The event may indicate a malfunction or a transient state of at least one apparatus among various apparatuses included in a system. The transient state may indicate a state in which a transient change has occurred in an apparatus due to a sudden change in a voltage or a current.

In the related art, a digital fault recorder (DFR) has been used as the transient recorder to continuously record data about a status of large equipment included in the solar power generation system 200. The DFR may be used by being connected to the large equipment including a power plant, a substation, and the like. The DFR is expensive and complicated to install.

The energy storage system 210 according to the disclosure may operate as the transient recorder. For example, the energy storage system 210 according to an embodiment may provide a function of continuously recording data about states of various apparatuses included in the solar power generation system 200.

An energy storage system of the related art may provide a function of recording data about a state of the solar power generation system 200. However, the energy storage system of the related art focuses on providing a real-time monitoring function, and thus, resolution of the data may be insufficient.

For example, the data recorded by the energy storage system of the related art is used to perform real-time monitoring, and thus, the resolution of the data may be low for performing analysis on the recorded data.

The energy storage system of the related art does not have enough storage capacity, and thus is unable to record the data about the state of the solar power generation system 200, which may be used for analysis. Accordingly, the energy storage system of the related art is difficult to replace a transient recorder of the related art.

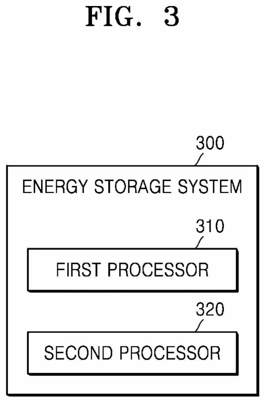

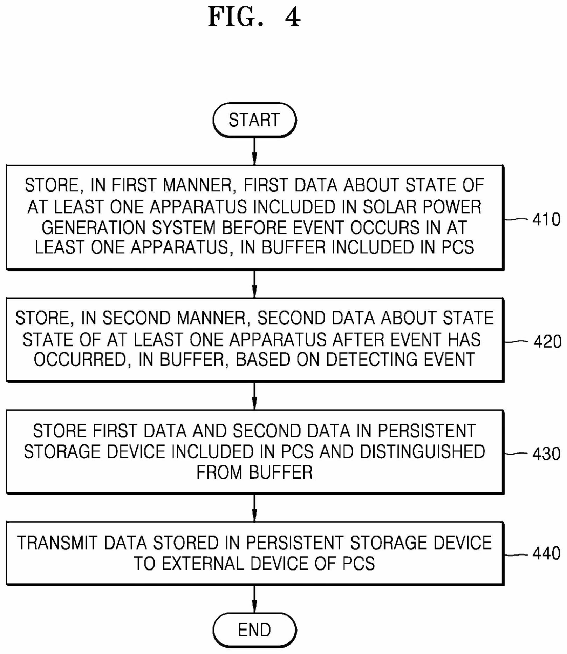

The energy storage system 210 according to the disclosure may provide the energy storage system 210 operable as a transient recorder through a method to be described with reference to FIGS. 3 to 8. The energy storage system 210 according to the disclosure may permanently preserve recorded data by using an embedded persistent storage device. Hereinafter, a method by which the energy storage system 210 according to an embodiment records data of the solar power generation system 200 will be described with reference to FIGS. 4 to 8.

FIG. 3 is a block diagram of an energy storage system 300 according to an embodiment.

Referring to FIG. 3, the energy storage system 300 including a first processor 310 and a second processor 320 is illustrated. The energy storage system 300 of FIG. 3 may correspond to the energy storage system 210 illustrated in FIG. 2 or the energy storage system 17 illustrated in FIG. 1.

The energy storage system 300 according to an embodiment may include the first processor 310 included in a PCS and a second processor 320 included in an EMS.

The PCS included in the energy storage system 300 may include the first processor 310 and a plurality of memories. The EMS included in the energy storage system 300 may include the second processor 320 and a plurality of memories.

The memory may be hardware that stores various types of data processed in the PCS and/or the EMS. The memory may include a volatile memory and a persistent storage memory. The memory may include random access memory (RAM), such as dynamic random access memory (DRAM), static random access memory (SRAM), and magnetoresistive random access memory (MRAM), read-only memory (ROM), and electrically erasable programmable read-only memory (EEPROM).

Detailed descriptions about a method by which the energy storage system 300 stores data about a state of at least one apparatus included in a solar power generation system by using a plurality of memories will be described below with reference to FIGS. 3 to 8.

The first processor 310 and the second processor 320 may control general operations of the energy storage system 300.

For example, the first processor 310 may store, in a first manner, first data about a state of at least one apparatus included in the solar power generation system before an event occurs in the at least one apparatus, in a buffer included in a PCS, store, in a second manner, second data about a state of the at least one apparatus after the event has occurred, in the buffer, based on detecting the event, store the first data and the second data in a persistent storage device included in the PCS and distinguished from the buffer, and transmit data stored in the persistent storage device to an external device of the PCS.

In another example, the first manner may be a manner of cyclically storing the first data collected in each of a plurality of cycles, in configuration buffers included in the buffer.

In another example, the second manner may be a manner of sequentially storing the second data collected in each of the plurality of cycles, in the configuration buffers included in the buffer.

In another example, the first processor 310 may arrange the first data stored in a buffer in chronological order and store the arranged first data in the persistent storage device.

In another example, the first processor 310 may initialize the buffer after the first data and the second data have been stored in the persistent storage device.

In another example, the external device may include an EMS included in the solar power generation system.

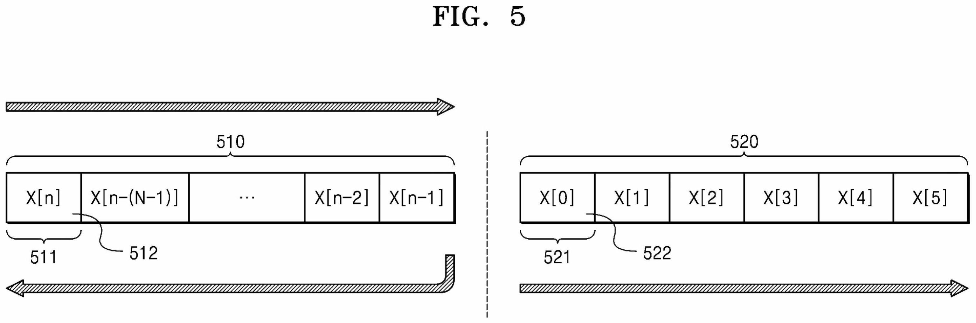

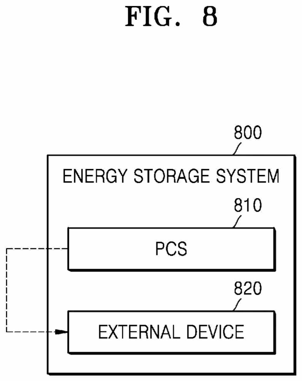

In another example, the second processor 320 may generate structured data, based on data received from the PCS. The structured data may be obtained by processing unstructured data. Detailed descriptions about the structured data and the unstructured data will be described below with reference to FIGS. 5 and 8.

In another example, the second processor 320 may store the structured data in a persistent storage device included in the external device.

In another example, the at least one apparatus may include at least one of at least one photovoltaic module 11, at least one device 12, the combiner 13, the distribution equipment 15, the energy storage system 17, the grid 16, or at least one load 14.

Detailed descriptions about various operations of the energy storage system 300, which may be performed by the first processor 310 and the second processor 320, will be described below with reference to FIGS. 3 to 8.

The first processor 310 and the second processor 320 may be realized by using at least one of an application-specific integrated circuit (ASIC), a digital signal processor (DSP), a digital signal processing device (DSPD), a programmable logic device (PLD), a field programmable gate array (FPGA), a controller, a micro-controller, a microprocessor, or electric units for performing other functions.

FIG. 4 is a flowchart of a method by which the energy storage system 300 records data about a state of at least one apparatus included in a solar power generation system, according to an embodiment.

In operation 410, the first processor 310 may store, in the first manner, the first data about the state of the at least one apparatus included in the solar power generation system before an event occurs in the at least one apparatus, in the buffer included in the PCS.

The event may refer to a malfunction, a transient state, or the like of an apparatus. For example, the event may include performance deterioration caused by an abnormal fluctuation in a voltage or a current in the at least one apparatus included in the solar power generation system.

The buffer may include a memory space used to temporarily store data. In an embodiment, the buffer may be implemented in an array. The array may indicate a set of data including a plurality of elements. The elements may indicate respective storage spaces configuring the array.

In an embodiment, the first manner may be a manner of cyclically storing the first data collected in each of the plurality of cycles, in the configuration buffers included in the buffer. The configuration buffer may indicate each element included in the buffer implemented in the array.

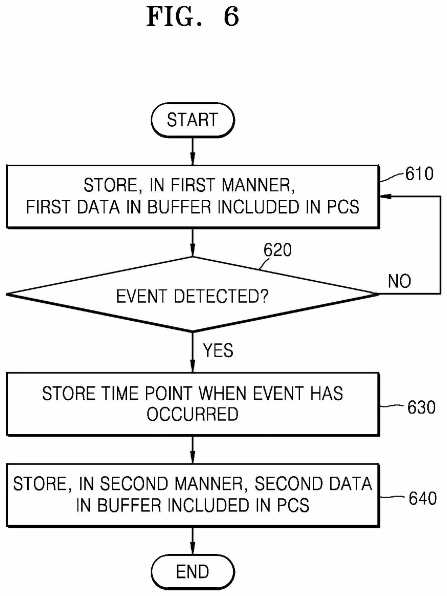

Detailed descriptions about a method by which the first processor 310 stores, in the first manner, the first data in the buffer included in the PCS, will be described below with reference to FIGS. 5 and 6. Detailed descriptions about the first data will be described below with reference to FIGS. 5 to 7.

In operation 420, the first processor 310 may store, in the second manner, the second data about the state of the at least one apparatus after the event has occurred, in the buffer, based on detecting the event.

In an embodiment, the second manner may be a manner of sequentially storing the second data collected in each of the plurality of cycles, in the configuration buffers included in the buffer.

Hereinafter, a method by which the first processor 310 stores, in the second manner, the second data in the buffer will be described with reference to FIGS. 5 and 6. Detailed descriptions about the second data will be described below with reference to FIGS. 5 to 7.

In operation 430, the first processor 310 may store the first data and the second data in the persistent storage device included in the PCS and distinguished from the buffer.

In an embodiment, the first processor 310 may arrange the first data stored in the buffer in chronological order and store the arranged first data in the persistent storage device. The persistent storage device may indicate a storage medium capable of preserving data stored therein regardless of whether the energy storage system 300 is turned on.

The persistent storage device may include the MRAM described above with reference to FIG. 3. The energy storage system 300 according to the disclosure includes the persistent storage device, and thus may preserve the data about the state of the at least one apparatus included in the solar power generation system even when the buffer is damaged.

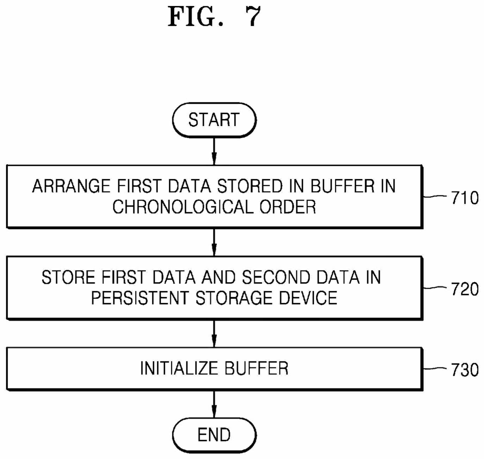

Hereinafter, a method by which the first processor 310 stores the first data and the second data in the persistent storage device will be described in detail with reference to FIG. 7.

In operation 440, the first processor 310 may transmit the data stored in the persistent storage device to the external device of the PCS. In an embodiment, the external device may include an EMS. In another embodiment, the external device is a device including the second processor 320 and the persistent storage device, and may include various devices other than the PCS. For example, the external device may include a computer.

In an embodiment, the second processor 320 may generate the structured data, based on the data received from the PCS. The structured data may be obtained by processing the unstructured data.

Detailed descriptions about meanings of the structured data and the unstructured data and about a method by which the second processor 320 generates the structured data, based on the data received from the PCS will be described below with reference to FIG. 8.

In an embodiment, the first processor 310 may initialize the buffer after the first data and the second data have been stored in the persistent storage device. Here, the persistent storage device may refer to the persistent storage device included in the PCS.

An energy storage system of the related art does not include a persistent storage device, and thus initializes an internal storage system only after data about a state of a system has been transmitted to an external device or the like. On the other hand, the energy storage system 300 according to the disclosure includes the persistent storage device, and thus initializes the buffer included in the PCS regardless of whether the data about the state of the system has been transmitted to the external device of the PCS.

Thus, the energy storage system 300 according to the disclosure may quickly initialize the buffer included in the PCS by decreasing a time required for a communication process. Accordingly, the data about the state of the at least one apparatus may be further quickly collected. In some embodiments, the data about the state of the at least one apparatus may be collected even when PCS communication is impossible.

In an embodiment, the second processor 320 may store the structured data in the persistent storage device included in the external device.

Accordingly, the energy storage system 300 according to the disclosure may store the data about the state of the at least one apparatus included in the solar power generation system in the persistent storage device included in the PCS as well as the persistent storage device included in the external storage system. Thus, the energy storage system 300 according to the disclosure may have a reduced risk of data loss.

In another example, the at least one apparatus may include at least one of at least one photovoltaic module, at least one device, a combiner, a distribution equipment, an energy storage system, a grid, or at least one load. For example, the first processor 310 may collect the first data and the second data about a state of at least one of the at least one device, the combiner, the distribution equipment, the energy storage system, the grid, or the at least one load.

FIG. 5 is a diagram for describing a method by which the energy storage system 300 stores first data and second data in a buffer included in a PCS, according to an embodiment.

In an embodiment, the first processor 310 may store, in the first manner, the first data about the state of the at least one apparatus included in the solar power generation system before an event occurs in the at least one apparatus, in buffer 510 included in the PCS.

In an embodiment, the first processor 310 may store, in the second manner, the second data about the state of the at least one apparatus after the event has occurred, in the buffer 520, based on detecting the event.

The first data and the second data may be data about the state of at least one apparatus included in the solar power generation system.

In an embodiment, the at least one apparatus may include at least one of at least one photovoltaic module, at least one device, a combiner, a distribution equipment, an energy storage system, a grid, or at least one load. For example, the first processor 310 may obtain data about a state of an inverter included in the energy storage system as the first data and/or the second data about the state of the energy storage system.

In an embodiment, the data about the state of the apparatus may include at least one of data about a voltage of the apparatus and data about a current of the apparatus. For example, the first processor 310 may obtain, as the data about the state of the apparatus, data about a voltage of a DC link, a voltage of a grid, a current of a current transformer (CT), a voltage of an inverter, a current of the inverter, a voltage of a battery, a voltage of a bidirectional DC-DC converter (BDC), and/or a current of the BDC.

The DC link may refer to a circuit used to stabilize a DC voltage. The CT may refer to an apparatus that measures a current of a specific apparatus included in the solar power generation system, enabling monitoring of the current. The BDC may refer to an apparatus that converts a size of an input DC voltage.

Examples of the apparatus and the data about the state of the apparatus are not limited to those described above.

In an embodiment, the first data and the second data may be distinguished based on a time point when an event occurs. For example, the first data may include the data about the state of the apparatus before an event occurs. The second data may include the data about the state of the apparatus after an event has occurred.

In an embodiment, the first data and the second data may be unstructured data. The unstructured data is data that is distinguished from structured data that may be generated by the second processor 320 according to an embodiment, and may refer to raw data.

The raw data may refer to original data obtained by using a sensor. In detail, the raw data refers to data in an intact state obtained by using a sensor, and may refer to data that has not undergone separate processing. For example, the first data and the second data may be unstructured data, which may be measurement values of the states of various apparatuses collected by various sensors.

In an embodiment, the raw data may be analog-to-digital (ADC) raw data. The ADC raw data may refer to raw data converted into a digital signal by an ADC converter. The ADC raw data may be obtained by converting an analog signal to a digital signal such that a DSP may process the raw data.

The energy storage system according to the disclosure may store, in a buffer, the first data and the second data, which are unstructured data that have not undergone separate processing, thereby providing flexibility for a user to process and analyze the first data and the second data in a desired manner.

In an embodiment, the first manner may be a manner of cyclically storing the first data collected in each of the plurality of cycles, in configuration buffers included in the buffer 510. For example, the first processor 310 may cyclically store the first data collected in one cycle, in the configuration buffers included in the buffer 510. As described above with reference to FIG. 4, the configuration buffer may refer to each element included in the buffers 510 and 520 implemented in an array.

Referring to FIG. 5, the buffer 510 (hereinafter, circular buffer 510) in which the first data collected in each of the plurality of cycles is stored in the first manner is illustrated. In an embodiment, each element of the circular buffer 510 may store first data 512 collected in each cycle by the first processor 310.

A case where the first processor 310 stores, in the first manner, the first data in the circular buffer 510 including total N elements will now be described. For example, the first processor 310 may store the first data 512 collected in a first cycle in a first element 511 of the circular buffer 510.

The first processor 310 may store the first data collected in an Nth cycle in an Nth element of the circular buffer 510. Here, based on storing the first data in the Nth element of the circular buffer 510, the first processor 310 may store the first data collected in an (N+1)th cycle in the first element 511 of the circular buffer 510.

In an embodiment, the second manner may be a manner of sequentially storing the second data collected in each of the plurality of cycles, in the configuration buffers included in the buffer 520. For example, the first processor 310 may sequentially store the second data collected in each cycle in the configuration buffers included in the buffer 520.

Referring to FIG. 5, the buffer 520 (hereinafter, sequential buffer 520) in which the second data collected in each of the plurality of cycles is stored in the second manner is illustrated. In an embodiment, a first element 521 of the sequential buffer 520 may store second data 522 collected by the first processor 310 in one cycle. The second data 522 stored in the first element 521 of the sequential buffer 520 may be data collected in a first cycle after an event has occurred. This may be because the first data and the second data are distinguished based on a time point when an event occurs.

A case where the first processor 310 stores the second data in the sequential buffer 520 including total N elements will now be described. For example, the first processor 310 may store the second data 522 collected in the first cycle after an event has occurred, in the first element 521 of the sequential buffer 520. Then, the first processor 310 may sequentially store the second data collected sequentially, in each element included in the sequential buffer 520 until the second data collected in an Nth cycle after the event has occurred is stored in an Nth element of the sequential buffer 520.

As described above with reference to FIG. 5, the buffers 510 and 520 included in the PCS may include the circular buffer 510 and the sequential buffer 520. For example, the circular buffer 510 and the sequential buffer 520 may be distinguished based on how the first processor 310 stores the first data and/or the second data.

In another example, the circular buffer 510 and the sequential buffer 520 may be distinguished based on a time point when an event occurs. For example, among the buffers 510 and 520 included in the PCS, the plurality of configuration buffers in which the first processor 310 stores the first data before an event occurs may be classified as the circular buffer 510. Among the buffers 510 and 520 included in the PCS, the plurality of configuration buffers in which the first processor 310 stores the second data after an event has occurred may be classified as the sequential buffer 520.

FIG. 6 is a flowchart of a method by which the energy storage system stores the first data and the second data in the buffer included in the PCS, according to an embodiment.

In operation 610, the first processor 310 may store, in the first manner, the first data in the buffer included in the PCS. Detailed descriptions about the method by which the first processor 310 stores, in the first manner, the first data in the buffer included in the PCS, have been described above with reference to FIG. 5, and thus are omitted.

In operation 620, the first processor 310 may detect an event. The meaning of the event has been described above with reference to FIGS. 2 and 4, and thus is omitted.

In operation 630, the first processor 310 may store a time point when the event has occurred. This may be to arrange the first data in chronological order, based on the time point when the event has occurred. For example, the first processor 310 may store an index of an element in which the first data collected immediately before the event occurs is stored. The index may refer a number that defines a location of an element included in an array.

Detailed descriptions about a method by which the first processor 310 arranges the first data stored in the buffer in chronological order, based on the stored time point when the event has occurred will be described below with reference to operation 710 of FIG. 7.

The first processor 310 may perform operation 640 when an event is detected. The first processor 310 may perform operation 610 when an event is not detected. As described above with reference to FIG. 5, the storing, in the first manner, of the first data in the buffer included in the PCS may indicate that the first processor 310 cyclically stores the first data in the configuration buffers included in the buffer. For example, the first processor 310 may continuously collect the data about the state of the at least one apparatus included in the solar power generation system by circulating through the configuration buffers until an event is detected.

In operation 640, the first processor 310 may store, in the second manner, the second data in the buffer included in the PCS. Detailed descriptions about the method by which the first processor 310 stores, in the second manner, the second data in the buffer included in the PCS, have been described above with reference to FIG. 5, and thus are omitted.

FIG. 7 is a flowchart of a method by which the energy storage system stores the first data and the second data in the persistent storage device included in the PCS, according to an embodiment.

In an embodiment, the first processor 310 may store the first data and the second data in the persistent storage device included in the PCS and distinguished from the buffer. For example, the first processor 310 may store the first data and the second data in the persistent storage device through operations 710 to 730 below.

In an embodiment, the first processor 310 may arrange the first data stored in the buffer in chronological order. In another embodiment, the first processor 310 may store the arranged first data in the persistent storage device. Hereinafter, a method by which the first processor 310 arranges the first data in chronological order and stores the arranged first data in the persistent storage device will be described in detail with reference to operations 710 and 720.

In operation 710, the first processor 310 according to an embodiment may arrange the first data stored in the buffer in chronological order. The buffer may refer to the buffer included in the PCS described above with reference to FIG. 5. For example, the first processor 310 may arrange the first data in chronological order, based on the time point when the event has occurred, stored in operation 630.

A case where the first processor 310 stores, in the first manner, the first data in the circular buffer 510 including total six elements will now be described. For example, when the first processor 310 stores the first data in the first manner, the first data collected in a 7th cycle may be stored in a first element of the circular buffer 510. The first data collected in a second cycle may be stored in a second element of the circular buffer 510. This may be a result of the first processor 310 storing the first data in the first manner.

The first processor 310 according to an embodiment may arrange the first data in chronological order, based on an index of an element in which the first data collected immediately before the stored time point when the event has occurred is stored. For example, the first processor 310 may arrange the first data in chronological order by considering, as oldest data, data stored in a following element after the element in which the first data collected immediately before the stored time point when the event has occurred is stored.

For example, if the index of the element in which the first data collected immediately before the stored time point when the event has occurred is stored is 2, the first processor 310 may consider the first data stored in an element with an index 3 as the oldest data. This may be a result of the first processor 310 cyclically storing the first data collected for each cycle in the configuration buffers.

In operation 720, the first processor 310 may store the first data and the second data in the persistent storage device. At this time, the first data may be first data arranged in chronological order. Accordingly, the energy storage system according to the disclosure may preserve the first data and the second data by using the persistent storage device even if the buffer is damaged.

In operation 730, the first processor 310 may initialize the buffer included in the PCS. In an embodiment, the first processor 310 may initialize the buffer after the first data and the second data have been stored in the persistent storage device.

The first processor 310 according to an embodiment may initialize the buffer regardless of whether the data about the state of the system has been transmitted to the external device of the PCS, thereby shortening a time required for transmitting the data to the outside, and thus, the data about the state of the at least one apparatus may be further quickly collected. In some embodiments, the data about the state of the at least one apparatus may be collected even when PCS communication is impossible.

FIG. 8 is a diagram for describing a method by which an energy storage system 800 transmits data stored in a persistent storage device to an external device 820 of a PCS 810, according to an embodiment.

Referring to FIG. 8, the energy storage system 800 including the PCS 810 and the external device 820 is illustrated. The energy storage system 800 of FIG. 8 may correspond to the energy storage system 300 of FIG. 3 or the energy storage system 17 of FIG. 1.

Although FIG. 8 illustrates that the external device 820 is included in the energy storage system 800, but in an embodiment, the external device 820 may be located outside the energy storage system 800 (not shown). As described above with reference to FIG. 4, the external device 820 is a device including the second processor 320 and the persistent storage device, and may include various devices other than the PCS 810.

In an embodiment, the first processor 310 may transmit the data stored in the persistent storage device to the external device 820 of the PCS 810. For example, the first processor 310 may transmit the data stored in the persistent storage device included in the PCS 810 to the external device 820 of the PCS 810. The data stored in the persistent storage device included in the PCS 810 may be data stored through operations described above with reference to FIGS. 6 and 7.

For example, the first processor 310 may transmit the data stored in the persistent storage device included in the PCS 810 to the external device 820 of the PCS 810 by using a preset communication protocol. The second processor 320 included in the external device 820 may receive the data transmitted by the first processor 310. The preset communication protocol according to an embodiment, which may be used by the first processor 310 and the second processor 320, will now be described.

The first processor 310 may transmit, to the external device 820, a signal for transmitting the data stored in the persistent storage device to the external device 820.

Then, the first processor 310 may transmit offset data, gain data, and calibration data used for data processing. The offset data may be data that includes a difference between a preset reference point and an actual measurement value. The gain data may be data that includes a scaling ratio between an input value and an output value. The scaling ratio may refer to an amplification ratio or a reduction ratio of the input value. The calibration data may be data used for a calibration process to minimize a difference between final output values.

The first processor 310 may transmit the data stored in the persistent storage device included in the PCS 810. The transmitted data is the data stored in the persistent storage device included in PCS 810 and may be unstructured data. The unstructured data, as described above with reference to FIG. 5, is data distinguished from structured data and may refer to raw data. Detailed descriptions about the unstructured data have been described above with reference to FIG. 5, and thus are omitted.

The first processor 310 according to an embodiment may transmit, to the external device 820, the first data and the second data corresponding to the unprocessed unstructured data, thereby providing flexibility for the user to analyze the first data and the second data in a desired manner.

The communication protocol that may be used by the first processor 310 is not necessarily limited to that described above.

In an embodiment, the second processor 320 may generate structured data, based on the data received from the PCS 810. For example, the second processor 320 may generate the structured data by using at least one of the first data, the second data, the offset data, the gain data, or the calibration data, which are received from the PCS 810.

The structured data is data distinguished from unstructured data and may be obtained by processing raw data. For example, the structured data may be data obtained by processing the first data and the second data by using the offset data, the gain data, and/or the calibration data.

For example, the structured data is data obtained by processing raw data, and may represent actual physical quantities. For example, the structured data may be data for representing the actual physical quantities including a voltage, a current, and the like. The second processor 320 according to an embodiment may generate the structured data that may express the actual physical quantities by using the unstructured data including the measurement values obtained by various sensors.

The structured data according to an embodiment may be data structured to be used for analysis. In an embodiment, the structured data may include data in the form of a graph. In another embodiment, the structured data may include a table in which the data about the state of the at least one apparatus is recorded according to time.

In an embodiment, the second processor 320 may store the structured data in the persistent storage device included in the external device 820. Accordingly, the energy storage system according to the disclosure may store the data about the state of the at least one apparatus in the persistent storage device included in the PCS as well as the persistent storage device included in the external storage system. Thus, the energy storage system according to the disclosure may have a reduced risk of data loss.

Through a method and apparatus for recording data of a solar power generation system, data about a state of at least one apparatus included in the solar power generation system may be stored in a persistent storage device, thereby recording and preserving the data of the solar power generation system.

In particular, according to the disclosure, the data about the state of the at least one apparatus included in the solar power generation system may be stored with high resolution without having to use a separate device such as a DFR, and the stored data may be preserved in the persistent storage device, thereby recording the data of the solar power generation system further efficiently.

The embodiments according to the disclosure described above may be implemented in a form of a computer program executable by various components on a computer, and such a computer program may be recorded in a computer-readable medium.

Here, the computer-readable medium may include hardware devices specially designed to store and execute program instructions, such as magnetic media, such as a hard disk, a floppy disk, and a magnetic tape, optical recording media, such as CD-ROM and DVD, magneto-optical media such as a floptical disk, and read-only memory (ROM), random-access memory (RAM), and a flash memory.

The computer program may be specially designed for the disclosure or well known to one of ordinary skill in the computer software field. Examples of the computer program include not only machine codes generated by a compiler, but also high-level language codes executable by a computer by using an interpreter or the like.

Certain executions described in the disclosure are embodiments and do not limit the scope of the disclosure in any way. For brevity of the specification, general electronic configurations, control systems, software, and other functional aspects of systems may be omitted. In addition, connection or connection members of lines between components shown in the drawings exemplarily represent functional connections and/or physical or circuit connections, and in an actual apparatus, may be replaced or may be implemented as various additional functional connections, physical connections, or circuit connections. Also, elements described herein may not be essential elements for application of the disclosure unless the elements are particularly described as being "essential" or "critical".

The term "the" and similar referential terms in the specification (specifically in the claims) of the disclosure may be used for both the singular and the plural. Further, when a range is described in the disclosure, the disclosure includes inventions to which individual values belonging to the range are applied (unless otherwise stated), and it is considered that each individual value in the range is described in the detailed description of the disclosure.

Unless an order is clearly stated or unless otherwise stated, operations configuring a method according to the disclosure may be performed in an appropriate order. The disclosure is not necessarily limited by an order the operations are described. In the disclosure, the use of all examples or exemplary terms (for example, "etc.") is merely for describing the disclosure in detail and the scope of the disclosure is not limited by those examples or exemplary terms unless defined in the claims. Also, it would be obvious to one of ordinary skill in the art that various modifications, combinations, and changes may be configured according to design conditions and factors within the scope of claims or equivalents.

Therefore, the scope of the disclosure should not be determined limitedly based on the above-described embodiments, and not only the appended claims but also all ranges equivalent to or equivalently changed from the claims are within the scope of the disclosure.

## Claims

1. A method of recording data of a solar power generation system, the method comprising:
storing, in a first manner, first data about a state of at least one apparatus included in the solar power generation system before an event occurs in the at least one apparatus, in a buffer included in a power conversion system (PCS);
storing, in a second manner, second data about a state of the at least one apparatus after the event has occurred, in the buffer, based on detecting the event;
storing the first data and the second data in a persistent storage device included in the PCS and distinguished from the buffer; and
transmitting data stored in the persistent storage device to an external device of the PCS.

2. The method of claim 1, wherein the storing in the first manner comprises cyclically storing the first data collected in each of a plurality of cycles, in configuration buffers included in the buffer.

3. The method of claim 1, wherein the storing in the second manner comprises sequentially storing the second data collected in each of a plurality of cycles, in configuration buffers included in the buffer.

4. The method of claim 1, wherein the storing in the persistent storage device comprises:
arranging the first data stored in the buffer in chronological order; and
storing the arranged first data in the persistent storage device.

5. The method of claim 1, further comprising initializing the buffer after the first data and the second data have been stored in the persistent storage device.

6. The method of claim 1, further comprising generating structured data, based on the data received from the PCS.

7. The method of claim 6, further comprising storing the structured data in a persistent storage device included in the external device.

8. A computer-readable recording medium having recorded thereon a program for causing a computer to execute the method of claim 1.

9. An energy storage system comprising a first processor and a second processor, which are configured to execute at least one program to perform an operation,
wherein the first processor is further configured to:
store, in a first manner, first data about a state of at least one apparatus included in a solar power generation system before an event occurs in the at least one apparatus, in a buffer included in a power conversion system (PCS);
store, in a second manner, second data about a state of the at least one apparatus after the event has occurred, in the buffer, based on detecting the event;
store the first data and the second data in a persistent storage device included in the PCS and distinguished from the buffer; and
transmit data stored in the persistent storage device to an external device of the PCS.

10. The energy storage system of claim 9, wherein the first manner comprises a manner of cyclically storing the first data collected in each of a plurality of cycles, in configuration buffers included in the buffer.

11. The energy storage system of claim 9, wherein the second manner comprises a manner of sequentially storing the second data collected in each of a plurality of cycles, in configuration buffers included in the buffer.

12. The energy storage system of claim 9, wherein the first processor is further configured to:
arrange the first data stored in the buffer in chronological order; and
store the arranged first data in the persistent storage device.

13. The energy storage system of claim 9, wherein the first processor is further configured to initialize the buffer after the first data and the second data have been stored in the persistent storage device.

14. The energy storage system of claim 9, wherein the second processor is further configured to generate structured data, based on the data received from the PCS.

15. The energy storage system of claim 14, wherein the second processor is further configured to store the structured data in a persistent storage device included in the external device.
